# EUROPÄISCHE PATENTSCHRIFT

(11) **EP 3 968 104 B1**
(45) Veröffentlichungstag und Bekanntmachung des Hinweises auf die Patenterteilung: **10.05.2023**
(21) Anmeldenummer: 20196159.6
(22) Anmeldetag: 15.09.2020
(51) Int. Cl.: G05B 15/02

(54) **SYSTEM UND VERFAHREN FÜR DIE GEBÄUDEAUTOMATION UNTER VERWENDUNG EINER WETTERABHÄNGIGEN MESSGRÖSSE**
SYSTEM AND METHOD FOR BUILDING AUTOMATION USING A WEATHER-DEPENDENT VARIABLE
SYSTÈME ET PROCÉDÉ POUR L'AUTOMATISATION DU BÂTIMENT À L'AIDE D'UNE GRANDEUR MESURÉE DÉPENDANT DU TEMPS

(43) Veröffentlichungstag der Anmeldung: 16.03.2022
(73) Patentinhaber: GIRA GIERSIEPEN GmbH & Co. KG, 42477 Radevormwald (DE)
(72) Erfinder: Kobold, Andreas, 50670 Köln (DE)
(74) Vertreter: Angerhausen, Christoph

(56) Entgegenhaltungen:
- EP-A1- 3 038 294
- CN-A- 111 184 484

## Beschreibung

Die Erfindung geht aus von einer Anordnung für die Gebäudeautomation, die mindestens einen Aktor aufweist, der von einem aus mindestens einer wetterabhängigen Messgröße abgeleiteten Steuersignal angesteuert ist, wobei dieselbe wetterabhängige Messgröße jeweils von mindestens zwei voneinander beabstandeten Sensoren der Anordnung erfasst ist. Ferner weist diese Anordnung eine Steuereinheit auf, die dazu eingerichtet ist, aus dieselbe wetterabhängige Messgröße betreffenden Messsignalen der mindestens zwei voneinander beabstandeten Sensoren ein gemitteltes Messsignal zu berechnen und auf Grundlage dieses das Steuersignal zur Ansteuerung des Aktors zu erzeugen und an den Aktor weiterzuleiten. Die Anordnung weist weiterhin einen Speicher auf, in dem die wetterabhängige Messgröße betreffende Messsignale der mindestens zwei voneinander beabstandeten Sensoren einschließlich einer das jeweilige Messsignal betreffenden Ortsinformation hinterlegt ist.

Die DE 10 2017 218 742 A1 beschreibt ein Verfahren zur Ermittlung einer erwarteten Temperaturkurve sowie ein Verfahren zur Ermittlung eines Heiz- und/oder Kühlprogramms für ein Heiz- und/oder Kühlsystem, wobei unter anderem unter Berücksichtigung der gemessenen Außentemperatur eine vorgegebene Soll-Zimmertemperatur erreicht werden soll. Hierzu kann beispielweise auf Sensordaten aus der Nachbarschaft zurückgegriffen werden, um unabhängig von externen Diensten zu sein, indem jeder Nachbar der Nachbarschaft seine Sensordaten zur Verfügung stellt.

Gemäß der Lehre der US 10,231,003 B2 sollen im Falle eines Feuers oder eines Einbruchs in der Umgebung einer Nachbarschaft aus miteinander vernetzten Gebäuden Alarme in den vernetzten Gebäuden zentral ausgelöst werden.

Insbesondere dann, wenn Wetterdaten, mithin von den aktuellen Wetterbedingungen abhängige Parameter, etwa die Umgebungstemperatur, eine Sonneneinstrahlung, eine Windgeschwindigkeit und ähnliche Parameter in die Steuerung des Gebäudeautomationssystems einfließen sollen, beispielsweise um bei Sturm mit einem Jalousieaktor den Jalousiemotor anzusteuern, die Jalousie einzuholen, ist eine zuverlässige Erfassung der wetterabhängigen Parameter häufig nicht möglich.

Aus der EP 3 038 294 A1 ist ein System zur Bereitstellung von Umweltdaten für die Steuerung gebäudetechnischer Einrichtungen bei Gebäuden an unterschiedlichen lokalen Gebäudestandorten bekannt, welches Sensoren zum Erfassung von Umweltmessgrößen aufweist. Auf diesen Umweltmessgrößen basierende Umweltdaten werden an eine Datenzentrale übermittelt und den Steuerungsanordnungen zusätzlich zu den lokal erfassten Messgrößen zur Steuerung der gebäudetechnischen Einrichtungen zur Verfügung gestellt. Eine ähnliches Verfahren für die Steuerung eines Gebäudeautomationssystems, welches einer Vielzahl von Sensoren aufweist, ist aus der CN 111 184 484 A bekannt.

Wenn entsprechende Sensoren an dem betreffenden Gebäude ungünstig positioniert sind, etwa in einem Licht- oder Windschatten, kommt es zu einer unzuverlässigen Ansteuerung der Aktoren, womit in dem vorgenannten Beispiel beispielsweise zur Beschädigung der Jalousieanlage riskiert wird.

Es ist daher die Aufgabe der Erfindung, eine Anordnung der eingangs beschriebenen Art derart weiterzuentwickeln, dass sie die zuverlässige Ansteuerung des Gebäudeautomationssystems unter Berücksichtigung wetterabhängiger Parameter erlaubt.

Diese Aufgabe wird durch eine Anordnung mit den Merkmalen des Anspruchs 1 gelöst. Der nebengeordnete Anspruch 10 betrifft ein entsprechendes Verfahren. Vorteilhafte Ausführungsformen der Erfindung sind Gegenstand der abhängigen Ansprüche. Demgemäß ist bei einer Anordnung für die Gebäudeautomation vorgesehen, dass das gemittelte Messsignal ein gewichtetes, gemitteltes Messsignal ist, bei dem eine Wichtung des betreffenden Messsignals abhängig von der Himmelsrichtung ist, in die der das betreffende Messsignal aufnehmende Sensor ausgerichtet ist.

Die Steuereinheit kann zentral in einem Gebäude realisiert sein, in welchem der anzusteuernde Aktor angeordnet ist. Alternativ kann die Steuereinheit auch zumindest teilweise cloud-basiert ausgeführt sein, etwa zumindest insoweit die Mittelung der Sensorsignale betroffen ist, sodass die Steuereinheit, soweit sie lokal dem Gebäude zugeordnet ist, in welchem der Aktor angeordnet ist, lediglich noch für die Ableitung des Steuersignals aus dem von der Cloud bezogenen gemittelten Messsignal eingerichtet ist. Aus Sicherheit- und Datenschutzgründen kann es jedoch bevorzugt sein, dass lediglich die Messsignale der mindestens zwei Sensoren der Mehrzahl Sensoren cloud-basiert bereitgestellt sind, auf die dann beispielsweise eine Steuereinheit, die in Software implementiert als ein Home-Server bereitgestellt ist, zugreifen kann, um dort die Messsignale der mindestens zwei Sensoren abzufragen. Die Steuereinheit kann daraufhin selbsttätig und gegebenenfalls auch ohne Unterstützung von einer Entität die außerhalb des Gebäudes, in dem der anzusteuernde Aktor angeordnet ist, realisiert ist, die erfindungsgemäße Mittelung der von mehreren zueinander beabstandeten Sensoren bezogenen und dieselbe wetterabhängige Messgröße betreffenden Messsignale durchzuführen.

Es kann vorgesehen sein, dass die Jalousie einer Gebäudeautomationsanlage abhängig von der Windgeschwindigkeit angesteuert wird, beispielsweise indem bei Überschreiten einer von den mindestens zwei zueinander beabstandeten Sensoren gemessenen Schwellwindgeschwindigkeit die Jalousie eingeholt wird. Dies kann auch dann erfolgen, wenn nach dem üblichen Tagesablaufprogramm, etwa uhrzeitabhängig, die Jalousie noch ausgefahren wäre oder auch obwohl ein zusätzlich vorgesehener Lichtintensitätssensor eine hohe Lichtintensität misst, welche zu einer Absenkung der Jalousie veranlassen würde. So kann beispielsweise die wetterabhängige Messgröße Windgeschwindigkeit aus den Messsignalen einer Mehrzahl voneinander beabstandeter Sensoren durch Mittelung erzeugt werden, sodass mögliche Messfehler eines einzelnen Sensors aufgrund verschiedenster, möglicher Faktoren, beispielsweise wegen bauseitig bedingter, unvorteilhaften Anordnung des Sensors an der Gebäudeaußenhülle, weniger stark ins Gewicht fallen.

Ein weiteres Beispiel betrifft die Messung der Helligkeit bzw. Lichtintensität oder die Messung der Temperatur, welche häufig durch Schattenwurf beeinflusst sind. Auch hier kann erfindungsgemäß durch eine Mehrzahl Sensoren, die unter einem Abstand zueinander angeordnet sind, und durch Mittelung der Sensormesssignale eine Verbesserung der Messsignalqualität erreicht werden. Das erfindungsgemäße Konzept hat auch Vorteile gegenüber Lösungen, bei denen Wetterdaten aus internetbasierten Diensten bezogen werden, da die über diese Dienste bereitgestellten Daten häufig aufgrund unzureichender lokaler Auflösung zu ungenau sind.

Die Mittelung der Messsignale ist auf keine bestimmten Mittelungsverfahren beschränkt. Insbesondere können hier die Erzeugung eines arithmetischen Mittels, die Erzeugung eines Medians, oder auch die Anwendung eines gewichteten Mittelwerts herangezogen werden.

Die wetterabhängige Messgröße ist auf keine bestimmten Ausführungsformen beschränkt. Sie kann beispielsweise eine Temperatur, eine Windgeschwindigkeit, eine Lichtintensität, eine Luftfeuchtigkeit oder dergleichen sein. Die wetterabhängige Messgröße kann auch eine aus einer primären Messgröße abgeleitete Messgröße sein, beispielsweise ein aus einer gemessenen Temperatur und einer gemessenen Luftfeuchtigkeit bestimmter Taupunkt.

Das Steuersignal kann beispielsweise ein Steuersignal sein, welches über ein Bussystem in einem Netzwerk eines Gebäudeautomationssystems verteilt werden kann. Demgemäß kann das Steuersignal beispielsweise nach dem KNX-Protokoll verschlüsselt sein.

Die Steuereinheit kann beispielsweise in Software implementiert auf einem Home-Server eines Gebäudeautomationssystems umgesetzt sein. Mit dem Home-Server können sowohl die Sensoren als auch die Aktoren des Gebäudeautomationssystems vernetzt sein, beispielsweise über ein drahtgebundenes oder drahtloses Bussystem.

Das gemittelte Messsignal, auf Grundlage welches das Steuersignal zur Ansteuerung des Aktors erzeugt wird, kann mehrere gemittelte Messsignale aufweisen, etwa ein gemitteltes Messsignal betreffend die Umgebungstemperatur und ein gemitteltes Messsignal betreffend die Windgeschwindigkeit. Dabei kann auf Grundlage beider gemittelter Messsignale das Steuersignal zur Ansteuerung des Aktors erzeugt werden. Gegebenenfalls können die beiden gemittelten Messsignale eine unterschiedliche Gewichtung aufweisen, mit welcher sie in die Erzeugung des Steuersignals zur Ansteuerung des Aktors einbezogen werden. Beispielsweise kann ein erstes gemitteltes Messsignal eine Temperaturmessung repräsentieren, während ein zweites gemitteltes Messsignal eine Windgeschwindigkeitsmessung repräsentiert. Für die Erzeugung der gemittelten Messsignale werden vorzugsweise nur gleichartige Messsignale der Sensoren betreffend dieselbe wetterabhängige Messgröße gemittelt, d. h. es werden bei der Erzeugung der gemittelten Messsignale keine Messsignale miteinander gemittelt, welche aus Messungen unterschiedlicher Messgrößen hervorgegangen sind.

Vorzugsweise sind zumindest zwei der Sensoren unterschiedlichen Gebäuden oder unterschiedlichen Gebäudeabschnitten zugeordnet, um eine weitere Verbesserung des gemittelten Messsignals zu erhalten. Beispielsweise können zumindest zwei der Sensoren unterschiedlichen und zueinander beabstandeten Gebäuden einer Nachbarschaft von Gebäuden zugeordnet sein. Insbesondere können die Sensoren an der Außenhülle des Gebäudes oder des Gebäudeabschnitts angeordnet sein. Je nach Art des Sensors, beispielsweise im Falle eines Lichtsensors, der eine einfallende Lichtintensität misst, kann der Sensor jedoch auch im Innern des Gebäudes angeordnet sein, beispielsweise indem er im Falle des genannten Lichtsensors die einfallende Lichtintensität durch ein Gebäudefenster hindurch misst.

Wenn die Sensoren unterschiedlichen und zueinander beabstandeten Gebäuden einer Nachbarschaft zugeordnet sind, so können die Gebäude der Nachbarschaft in einem Umkreis von maximal 10 km, vorzugsweise in einem Umkreis von maximal 1 km und besonders bevorzugt in einem Umkreis von maximal 200 m angeordnet sein.

Eine weitere Optimierung des gemittelten Messergebnisses kann dadurch erreicht werden, dass zumindest zwei der Sensoren in unterschiedliche Himmelsrichtungen ausgerichtet sind. Mindestens einer der Sensoren kann als eine Wetterstation ausgebildet sein. Die Wetterstation kann mehrere Einzelsensoren aufweisen, von denen jeder Einzelsensor eine andere wetterabhängige Messgröße erfasst.

Die Anordnung kann weiterhin einen Speicher aufweisen, in dem die wetterabhängige Messgröße betreffende Messsignale der mindestens zwei voneinander beabstandeten Sensoren einschließlich einer das jeweilige Messsignal betreffenden Ortsinformation und einschließlich einer das jeweilige Messsignal betreffenden Zeitinformation hinterlegt ist. Durch die Hinterlegung einer Ortsinformation und einer Zeitinformation ist es möglich, abhängig von der Ortsinformation und der Zeitinformation eine Gewichtung des betreffenden Messsignals bei der Mittelung zu berücksichtigen.

Zusätzlich kann dabei eine Wichtung des betreffenden Messsignals beispielsweise abhängig von dem Abstand des das betreffende Messsignal aufnehmenden Sensors zu dem Aktor oder zu einem anderen Bezugspunkt der Anordnung sein. Der Bezugspunkt kann beispielsweise eine von dem Aktor angesteuerte Systemkomponente des Gebäudeautomationssystems sein, beispielsweise eine Jalousie.

Das Messsignal kann bei der Ermittlung mit unterschiedlichen, gegebenenfalls auch konkurrierenden Gewichtungsfaktoren berücksichtigt werden, beispielsweise einem ersten Gewichtungsfaktor, der abhängig von einem Abstand des Sensors zu dem Aktor oder einem anderen Bezugspunkt der Anordnung ist, und einem zweiten Gewichtungsfaktor, der abhängig von der Himmelsrichtung ist, in welche der das betreffende Messsignal aufnehmende Sensor ausgerichtet ist.

Die Sensoren können jeweils dazu eingerichtet sein, mindestens zwei unterschiedliche Messgrößen zu erfassen, wobei die mindestens zwei unterschiedlichen Messgrößen von jedem der Sensoren erfasst sind, wozu die Sensoren vorzugsweise eine Wetterstation sind oder eine Wetterstation aufweisen. Bei dieser Ausführungsform können anstelle eines Sensors, der mehrere Messgrößen aufnimmt auch mehrere Sensoren vorgesehen sein, die jeweils nur einen Teil der unterschiedlichen Messgrößen erfassen. Beispielsweise können in einer Wetterstation mehrere Sensoren enthalten sein, beispielsweise ein erster Sensor, der eine Lichtintensität misst, ein zweiter Sensor, der eine Temperatur misst und ein dritter Sensor, der eine Windgeschwindigkeit misst. Der Sensor im Sinne der vorliegenden Erfindung kann daher die Wetterstation in ihrer Gesamtheit sein, welche wiederum eine Mehrzahl Einzelsensoren aufweist.

Die Steuereinheit kann dazu eingerichtet sein, das Steuersignal auf Grundlage der gemittelten Messsignale der mindestens zwei unterschiedlichen Messgrößen zu berechnen, wobei die Messgrößen untereinander eine Hierarchie aufweisen können oder gleichwertige Messgrößen sind, die in gleichem Maße in die Mittelung eingehen.

Gemäß einem anderen Aspekt wird ein Verfahren für die Gebäudeautomation beschrieben. Das Verfahren kann insbesondere unter Verwendung einer Anordnung der zuvor beschriebenen Art ausgeführt sein. Das Verfahren weist die Schritte auf:
- Erfassen jeweils derselben wetterabhängigen Messgröße mit mindestens zwei Sensoren, die voneinander beabstandet angeordnet sind;
- Ableiten eines Steuersignals für einen Aktor aus die wetterabhängige Messgröße betreffenden Messsignalen der mindestens zwei voneinander beabstandeten Sensoren und Weiterleiten des Steuersignals an den Aktor; und
- Berechnen eines gemittelten Messsignals aus den die wetterabhängige Messgröße betreffenden Messsignalen der mindestens zwei voneinander beabstandeten Sensoren sowie Erzeugen des Steuersignals auf Grundlage des gemittelten Messsignals.

Das Verfahren weist weiterhin das Speichern der die wetterabhängige Messgröße betreffenden Messsignale der mindestens zwei voneinander beabstandeten Sensoren einschließlich einer das jeweilige Messsignal betreffenden Ortsinformation auf.

Erfindungsgemäß weist das Berechnen des gemittelten Messsignals dabei das Berechnen eines gewichteten, gemittelten Messsignals auf, wobei eine Wichtung des betreffenden Messsignals abhängig von einer Himmelsrichtung ist, in die der jeweilige das betreffende Messsignal aufnehmende Sensor ausgerichtet ist.

Das Verfahren kann weiterhin das Speichern einer das jeweilige Messsignal betreffenden Zeitinformation aufweisen.

Das Berechnen des gemittelten Messsignals kann das Berechnen eines gewichteten, gemittelten Messsignals aufweisen, wobei eine Wichtung des betreffenden Messsignals abhängig von dem Abstand des das betreffende Messsignal aufnehmenden Sensors zu dem Aktor oder einem anderen Bezugspunkt der Anordnung festgelegt wird.

Das Erfassen jeweils derselben wetterabhängigen Messgröße mit mindestens zwei Sensoren, die voneinander beabstandet angeordnet sind, kann das jeweilige Erfassen von mindestens zwei sich unterscheidenden wetterabhängigen Messgrößen mit den mindestens zwei Sensoren aufweisen.

Das Berechnen des gemittelten Messsignals kann dabei das Berechnen eines gewichteten, gemittelten Messsignals aufweisen, wobei eine Wichtung des betreffenden Messsignals abhängig von der das jeweilige Messsignal betreffenden wetterabhängigen Messgröße festgelegt wird, wozu vorzugsweise eine Hierarchie zwischen unterschiedlichen Messgrößen festgelegt wird.

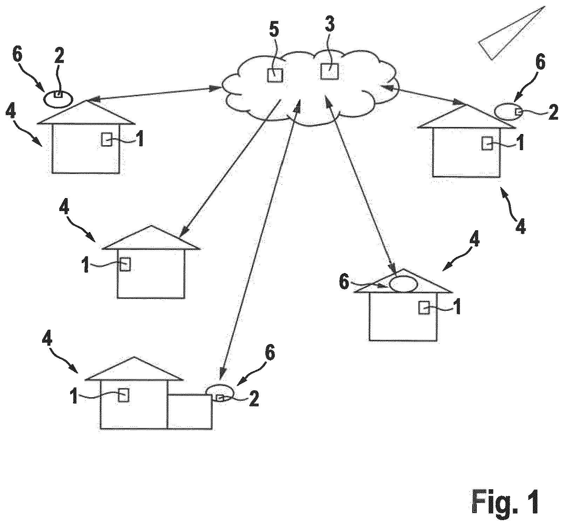

Weitere Einzelheiten der Erfindung werden anhand der nachstehenden Figur 1 erläutert. Diese zeigt in schematische Darstellung eine Nachbarschaft verschiedener Gebäude 4, denen teilweise eine Wetterstation 6 zugeordnet ist, während ein anderer Teil der Gebäude 4 keine Wetterstation 6 aufweist.

Häufig werden in sogenannten Smart-Homes Wetterinformation benötigt, um beispielsweise Jalousien oder Markisen in eine Sicherheitsposition zu fahren, wenn beispielsweise hohe Windgeschwindigkeiten herrschen. Dabei ist es häufig nicht möglich, an dem betreffenden Gebäude 4 eine Wetterstation 6 mit Sensoren 2 so anzubringen, dass sie eine optimale Messung beispielsweise der Windgeschwindigkeit ermöglicht. Dies kann sowohl bauliche als auch ästhetische Gründe haben und hat zur Folge, dass Wetterdaten häufig nicht vollständig und/oder korrekt erfasst werden. Beispielsweise wird die Messung der Helligkeit oder der Temperatur oftmals durch Schattenwurf beeinflusst. Hinzu kommt, dass aus den oben genannten Gründen oft keine Wetterstation oder sonstige Sensorik zur Erfassung von wetterabhängigen Messgrößen in oder an der Außenhülle des betreffenden Gebäudes 4 vorhanden ist. Die Verwendung von Internet-Wetterdiensten hat sich ebenfalls als nachteilhaft herausgestellt, da die dort zur Verfügung gestellten Daten in der Regel lokal nicht mit ausreichender Genauigkeit aufgelöst sind.

Zur Lösung dieser Problematik wird vorgeschlagen, dass diejenigen Gebäude 4 einer Nachbarschaft, die eine Wetterstation 6 aufweisen, entsprechende Wetterdaten, mithin wetterabhängigen Messgrößen, beispielsweise jeweils lokal gemessene Umgebungstemperaturen, Windgeschwindigkeiten, Luftfeuchtigkeiten und dergleichen, an eine zentrale Datensammelstelle liefern, die cloud-basiert realisiert sein kann, und auf die wiederum sämtliche Gebäude zugreifen können, um entsprechende Wetterdaten bedarfsweise abzufragen, unabhängig davon, ob sie selbst Daten zur Verfügung stellen. Die Wetterdaten können als die wetterabhängige Messgröße betreffende Messsignale der mindestens zwei und besonders bevorzugt der Vielzahl voneinander beabstandeten Sensoren bereitgestellt sein, oder bereits als ein gemitteltes Messsignal, das durch Mittelung der zuvor genannten Messsignale berechnet wurde.

Die Gebäude können sich vorzugsweise in einer Nachbarschaft mit einem lokal begrenzten Radius befinden, beispielsweise in einem Umkreis von wenigen Kilometern oder gar in einem Umkreis von wenigen 100 m. Auf diese Weise wird lokal hochaufgelöst ein repräsentativer Wetterdatensatz erzeugt, indem die von den verschiedenen Gebäuden mit Wetterstationen zur Verfügung gestellten Wetterdaten gemittelt werden. Dazu können dieselbe Messgröße betreffenden Messsignale der verschiedenen Wetterstationen gemittelt werden, um beispielsweise eine im Mittel wahrscheinlich sehr genaue Temperaturbestimmung und dergleichen in der Umgebung der Nachbarschaft durchführen zu können.

Bei der Mittelung der Messsignale zur Erzeugung eines gemittelten Messsignals kann eine Wichtung beispielsweise abhängig von Gewichtungsparametern erfolgen, die gemeinsam mit den Messsignalen der einzelnen Wetterstationen 6 an einen zentralen Wetterdienst bereitgestellt werden können, auf den die Gebäude der Nachbarschaft jeweils unabhängig voneinander Zugriff haben. Dabei kann die Mittelung entweder zentral durch den Wetterdienst und auf Anfrage eines bestimmten Gebäudes erfolgen, oder es kann abhängig von der Position des betreffenden Gebäudes in Bezug auf die Wetterstationen der übrigen Gebäude ein spezifisches gemitteltes Messsignal erzeugt wird. Alternativ kann die Mittelung auch in dem Gebäude, welches von dem Wetterdienst die Messsignale aus seiner Nachbarschaft abfragt, erfolgen, wobei eine Gewichtung der in die Mittelung einbezogenen Messsignale danach erfolgt, wie die Gebäude, deren Messstation das betreffende Messsignal zur Verfügung gestellt hat, in Bezug auf das Gebäude angeordnet sind, welches von dem Wetterdienst die Messsignale angefordert hat. So können beispielsweise Messsignale von einem Gebäude, das dem die Messsignale abfragenden Gebäude am nächsten angeordnet ist, stärker berücksichtigt werden, als die Messsignale eines Gebäudes in der Nachbarschaft, welches weiter entfernt von dem die Messsignale abfragenden Gebäude angeordnet ist.

Die Gewichtung erfolgt danach, wie die Wetterstation, welche das Messsignal liefert, in Bezug auf eine Himmelsrichtung ausgerichtet ist. Der Gewichtungsparameter Ausrichtung zur Himmelsrichtung ist anders als der Gewichtungsparameter Abstand besser dazu geeignet, um zentral auf dem Wetterdienst bereits die gewichteten Messsignale zur Verfügung zu stellen, da die Gewichtung für sämtliche Gebäude, welche auf die Messsignale zugreifen können, dieselbe ist, anders als bei der Gewichtung über den Abstand des abfragenden Gebäudes zu den Gebäuden, welche die in die Mittelung eingehenden Einzelmesssignale geliefert haben.

### Bezugszeichenliste:

- 1: Aktor
- 2: Sensor
- 3: Steuereinheit
- 4: Gebäude
- 5: Speicher
- 6: Wetterstation

## Patentansprüche

1. Anordnung für die Gebäudeautomation, die mindestens einen Aktor (1) aufweist, der von einem aus mindestens einer wetterabhängigen Messgröße abgeleiteten Steuersignal angesteuert ist, wobei dieselbe wetterabhängige Messgröße jeweils von mindestens zwei voneinander beabstandeten Sensoren (2) der Anordnung erfasst ist, wobei die Anordnung weiterhin eine Steuereinheit (3) aufweist, die dazu eingerichtet ist, aus dieselbe wetterabhängige Messgröße betreffenden Messsignalen der mindestens zwei voneinander beabstandeten Sensoren (2) ein gemitteltes Messsignal zu berechnen und auf Grundlage dieses gemittelten Messsignals das Steuersignal zur Ansteuerung des Aktors (1) zu erzeugen und an den Aktor (1) weiterzuleiten, wobei die Anordnung weiterhin einen Speicher (5) aufweist, in dem die die wetterabhängige Messgröße betreffenden Messsignale der mindestens zwei voneinander beabstandeten Sensoren (2) einschließlich einer das jeweilige Messsignal betreffenden Ortsinformation hinterlegt sind, **dadurch gekennzeichnet, dass** das gemittelte Messsignal ein gewichtetes, gemitteltes Messsignal ist, wobei eine Wichtung des betreffenden Messsignals abhängig von einer Himmelsrichtung ist, in die der jeweilige das betreffende Messsignal aufnehmende Sensor ausgerichtet ist.

2. Anordnung nach Anspruch 1, bei der zumindest zwei der Sensoren (2) unterschiedlichen Gebäuden (4) oder unterschiedlichen Gebäudeabschnitten zugeordnet sind.

3. Anordnung nach Anspruch 1, bei der zumindest zwei der Sensoren (2) unterschiedlichen und zueinander beabstandeten Gebäuden (4) einer Nachbarschaft von Gebäuden (4) zugeordnet sind.

4. Anordnung nach Anspruch 3, bei der die Gebäude (4) der Nachbarschaft von Gebäuden (4) in einem Umkreis von maximal 10 km, vorzugsweise in einem Umkreis von maximal 1 km und besonders bevorzugt in einem Umkreis von maximal 200 m angeordnet sind.

5. Anordnung nach einem der vorangegangenen Ansprüche, bei der zumindest zwei der Sensoren (2) in unterschiedliche Himmelsrichtungen ausgerichtet sind.

6. Anordnung nach einem der vorangegangenen Ansprüche wobei zusätzlich zu den die wetterabhängige Messgröße betreffenden Messsignalen der mindestens zwei voneinander beabstandeten Sensoren (2) einschließlich der das jeweilige Messsignal betreffenden Ortsinformation auch eine das jeweilige Messsignal betreffende Zeitinformation in dem Speicher (5) hinterlegt ist.

7. Anordnung nach Anspruch 6, bei der das gemittelte Messsignal ein gewichtetes, gemitteltes Messsignal ist, wobei eine Wichtung des betreffenden Messsignals abhängig von einem Abstand des jeweiligen das betreffende Messsignal aufnehmenden Sensors (2) zu dem Aktor (1) oder zu einem anderen Bezugspunkt der Anordnung ist.

8. Anordnung nach einem der vorangegangenen Ansprüche, bei der die Sensoren (2) jeweils dazu eingerichtet sind, mindestens zwei unterschiedliche Messgrößen zu erfassen, wobei die mindestens zwei unterschiedlichen Messgrößen von jedem der Sensoren (2) erfasst sind, wozu die Sensoren (2) vorzugsweise eine Wetterstation (6) sind oder eine Wetterstation (6) aufweisen.

9. Anordnung nach Anspruch 8, bei der die Steuereinheit (3) dazu eingerichtet ist, das Steuersignal auf Grundlage der gemittelten Messsignale der mindestens zwei unterschiedlichen Messgrößen zu berechnen, wobei die Messgrößen vorzugsweise untereinander eine Hierarchie aufweisen.

10. Verfahren für die Gebäudeautomation, das die Schritte aufweist:
- Erfassen jeweils derselben wetterabhängigen Messgröße mit mindestens zwei Sensoren (2), die voneinander beabstandet angeordnet sind;
- Speichern der die wetterabhängige Messgröße betreffenden Messsignale der mindestens zwei voneinander beabstandeten Sensoren (2) einschließlich einer das jeweilige Messsignal betreffenden Ortsinformation;
- Ableiten eines Steuersignals für einen Aktor (1) aus die wetterabhängige Messgröße betreffenden Messsignalen der mindestens zwei voneinander beabstandeten Sensoren (2) und Weiterleiten des Steuersignals an den Aktor (1), wobei das Ableiten des Steuersignals das Berechnen eines gemittelten Messsignals aus den die wetterabhängige Messgröße betreffenden Messsignalen der mindestens zwei voneinander beabstandeten Sensoren (2) und das Erzeugen des Steuersignals auf Grundlage des gemittelten Messsignals aufweist;
**dadurch gekennzeichnet, dass** das Berechnen des gemittelten Messsignals das Berechnen eines gewichteten, gemittelten Messsignals aufweist, wobei eine Wichtung des betreffenden Messsignals abhängig von einer Himmelsrichtung ist, in die der jeweilige das betreffende Messsignal aufnehmende Sensor (2) ausgerichtet ist.

11. Verfahren nach Anspruch 10, bei dem das Speichern der die wetterabhängige Messgröße betreffenden Messsignale der mindestens zwei voneinander beabstandeten Sensoren (2) einschließlich der das jeweilige Messsignal betreffenden Ortsinformation zusätzlich Speichern einer das jeweilige Messsignal betreffenden Zeitinformation aufweist.

12. Verfahren nach Anspruch 10 oder 11, bei dem das Berechnen des gemittelten Messsignals das Berechnen eines gewichteten, gemitteltes Messsignal aufweist, wobei eine Wichtung des betreffenden Messsignals abhängig von einem Abstand des jeweiligen das betreffende Messsignal aufnehmenden Sensors (2) zu dem Aktor (1) oder einem anderen Bezugspunkt der Anordnung festgelegt wird.

13. Verfahren nach einem der Ansprüche 10 bis 12, bei dem das Erfassen jeweils derselben wetterabhängigen Messgröße mit mindestens zwei Sensoren (2), die voneinander beabstandet angeordnet sind, das jeweilige Erfassen von mindestens zwei sich unterscheidenden wetterabhängigen Messgrößen mit den mindestens zwei Sensoren (2) aufweist.

14. Verfahren nach Anspruch 13, bei dem das Berechnen des gemittelten Messsignals das Berechnen eines gewichteten, gemittelten Messsignals aufweist, wobei eine Wichtung des betreffenden Messsignals abhängig von der das jeweilige Messsignal betreffenden wetterabhängigen Messgröße festgelegt wird, wozu vorzugsweise eine Hierarchie zwischen unterschiedlichen Messgrößen festgelegt wird.

## Claims

1. An arrangement for building automation, which has at least one actuator (1) which is driven by a control signal derived from at least one weather-dependent measured variable, the same weather-dependent measured variable being detected in each case by at least two sensors (2) of the arrangement which are spaced apart from one another, the arrangement furthermore having a control unit (3) which is set up to calculate an averaged measurement signal from measurement signals relating to the same weather-dependent measurement variable from the at least two sensors (2) spaced apart from one another, and to generate the control signal for driving the actuator (1) on the basis of this averaged measurement signal and to pass it on to the actuator (1), the arrangement further having a memory (5) in which the measurement signals relating to the weather-dependent measurement variable of the at least two sensors (2) spaced apart from one another are stored, including location information relating to the respective measurement signal, **characterized in that** the averaged measurement signal is a weighted, averaged measurement signal, a weighting of the respective measurement signal being dependent on a cardinal direction in which the respective sensor receiving the respective measurement signal is aligned.

2. The arrangement according to claim 1, in which at least two of the sensors (2) are assigned to different buildings (4) or different building sections.

3. The arrangement according to claim 1, wherein at least two of the sensors (2) are associated with different and spaced-apart buildings (4) of a neighborhood of buildings (4).

4. The arrangement according to claim 3, in which the buildings (4) of the neighborhood of buildings (4) are arranged within a radius of at most 10 km, preferably within a radius of at most 1 km and particularly preferably within a radius of at most 200 m.

5. The arrangement according to any one of the preceding claims, in which at least two of the sensors (2) are oriented in different cardinal directions.

6. The arrangement according to one of the preceding claims, wherein, in addition to the measurement signals relating to the weather-dependent measured variable of the at least two sensors (2) spaced apart from one another, including the location information relating to the respective measurement signal, also time information relating to the respective measurement signal is stored in the memory (5).

7. The arrangement according to claim 6, in which the averaged measurement signal is a weighted, averaged measurement signal, wherein a weighting of the measurement signal in question is dependent on a distance of the respective sensor (2) receiving the measurement signal in question from the actuator (1) or from another reference point of the arrangement.

8. The arrangement according to any one of the preceding claims, in which the sensors (2) are each set up to detect at least two different measured variables, the at least two different measured variables being detected by each of the sensors (2), for which purpose the sensors (2) are preferably a weather station (6) or comprise a weather station (6).

9. The arrangement according to claim 8, in which the control unit (3) is set up to calculate the control signal on the basis of the averaged measurement signals of the at least two different measurement variables, the measurement variables preferably having a hierarchy among each other.

10. A building automation method having the steps:
- Detecting of the same weather-dependent measured variable with at least two sensors (2) that are arranged at a distance from one another;
- Storing the measurement signals relating to the weather-dependent measured variable from the at least two spaced-apart sensors (2), including location information relating to the respective measurement signal;
- Deriving a control signal for an actuator (1) from measurement signals relating to the weather-dependent measured variable from the at least two sensors (2) spaced apart from one another, and forwarding the control signal to the actuator (1), wherein deriving the control signal comprises calculating an averaged measurement signal from the measurement signals relating to the weather-dependent measured variable from the at least two sensors (2) spaced apart from one another, and generating the control signal on the basis of the averaged measurement signal;
**characterized in that** said calculating the averaged measurement signal comprises calculating a weighted averaged measurement signal, wherein a weighting of the respective measurement signal is dependent on a cardinal direction in which the respective sensor (2) receiving the respective measurement signal is aligned.

11. The method according to claim 10, in which said storing of the measurement signals relating to the weather-dependent measured variable of the at least two sensors (2) spaced apart from one another, including the location information relating to the respective measurement signal, additionally comprises storing of time information relating to the respective measurement signal.

12. The method according to claim 10 or 11, wherein calculating the averaged measurement signal comprises calculating a weighted averaged measurement signal, wherein a weighting of the respective measurement signal is determined depending on a distance of the respective sensor (2) receiving the respective measurement signal to the actuator (1) or another reference point of the arrangement.

13. The method according to any one of claims 10 to 12, wherein said detecting of respectively the same weather-dependent measurand with at least two sensors (2) spaced apart comprises respectively detecting at least two different weather-dependent measurands with the at least two sensors (2).

14. The method according to claim 13, wherein calculating the averaged measurement signal comprises calculating a weighted averaged measurement signal, wherein a weighting of the measurement signal concerned is determined depending on the weather-dependent measurement variable concerning the measurement signal concerned, for which purpose preferably a hierarchy between different measurement variables is determined.

## Revendications

1. Dispositif de domotique, qui comprend au moins un actionneur (1) qui est contrôlé par un signal de commande dérivé d'au moins une grandeur de mesure météorologique, dans lequel cette grandeur de mesure météorologique est mesurée respectivement par au moins deux capteurs (2) distants entre eux du dispositif, dans lequel le dispositif comprend en outre une unité de commande (3) qui est conçue pour calculer, à partir des signaux de mesure, concernant cette grandeur de mesure météorologique, des au moins deux capteurs (2) distants entre eux, un signal de mesure moyenné et pour générer, sur la base de ce signal de mesure moyenné, le signal de commande pour le contrôle de l'actionneur (1) et le transmettre à l'actionneur (1), dans lequel le dispositif comprend en outre une mémoire (5) dans laquelle les signaux de mesure concernant la grandeur de mesure météorologique des au moins deux capteurs (2) distants entre eux sont enregistrés, y compris une information de localisation concernant le signal de mesure concerné, **caractérisé en ce que** le signal de mesure moyenné est un signal de mesure moyenné pondéré, dans lequel une pondération du signal de mesure concerné dépend d'un point cardinal vers lequel le capteur enregistrant le signal de mesure concerné est orienté.

2. Dispositif selon la revendication 1, dans lequel au moins deux des capteurs (2) sont attribués à différents bâtiments (4) ou à différentes parties d'un bâtiment.

3. Dispositif selon la revendication 1, dans lequel au moins deux des capteurs (2) sont attribués à des bâtiments (4) différents et distants entre eux d'un quartier de bâtiments (4).

4. Dispositif selon la revendication 3, dans lequel les bâtiments (4) du quartier de bâtiments (4) sont disposés dans un rayon de maximum 10 km, de préférence dans un rayon de maximum 1 km et plus particulièrement de préférence dans un rayon de maximum 200 m.

5. Dispositif selon l'une des revendications précédentes, dans lequel au moins deux des capteurs (2) sont orientés vers des points cardinaux différents.

6. Dispositif selon l'une des revendications précédentes, dans lequel, en plus des signaux de mesure, concernant la grandeur de mesure météorologique, des au moins deux capteurs (2) distants entre eux, y compris l'information de localisation concernant le signal de mesure, une information temporelle concernant le signal de mesure est également enregistrée dans la mémoire (5).

7. Dispositif selon la revendication 6, dans lequel le signal de mesure moyenné est un signal de mesure moyenné pondéré, dans lequel une pondération du signal de mesure concerné dépend d'une distance entre le capteur (2) enregistrant le signal de mesure concerné et l'actionneur (1) ou un autre point de repère du dispositif.

8. Dispositif selon l'une des revendications précédentes, dans lequel les capteurs (2) sont chacun conçus pour mesurer au moins deux grandeurs de mesure différentes, dans lequel les au moins deux grandeurs de mesure différentes sont mesurées par chacun des capteurs (2), les capteurs (2) étant pour cela de préférence une station météorologique (6) ou comprenant une station météorologique (6).

9. Dispositif selon la revendication 8, dans lequel l'unité de commande (3) est conçue pour calculer le signal de commande sur la base des signaux de mesure moyennés des au moins deux grandeurs de mesure différentes, dans lequel les grandeurs de mesure présentent de préférence une hiérarchie entre elles.

10. Procédé de domotique qui comprend les étapes suivantes :
- mesure de la même grandeur de mesure météorologique avec au moins deux capteurs (2) qui sont distants entre eux ;
- enregistrement des signaux de mesure concernant la grandeur de mesure météorologique des au moins deux capteurs (2) distants entre eux, y compris une information de localisation concernant le signal de mesure correspondant ;
- dérivation d'un signal de commande pour un actionneur (1) à partir des signaux de mesure concernant la grandeur de mesure météorologique des au moins deux capteurs (2) distants entre eux et transmission du signal de commande à l'actionneur (1),
dans lequel la dérivation du signal de commande comprend le calcul d'un signal de mesure moyenné à partir des signaux de mesure concernant la grandeur de mesure météorologique des au moins deux capteurs (2) distants entre eux et la génération du signal de commande sur la base du signal de mesure moyenné ;
**caractérisé en ce que** le calcul du signal de mesure moyenné comprend le calcul d'un signal de mesure moyenné pondéré, dans lequel une pondération du signal de mesure concerné dépend d'un point cardinal vers lequel le capteur (2) enregistrant le signal de mesure concerné est orienté.

11. Procédé selon la revendication 10, dans lequel l'enregistrement des signaux de mesure concernant la grandeur de mesure météorologique des au moins deux capteurs (2) distants entre eux, y compris l'information de localisation concernant le signal de mesure correspondant comprend en outre l'enregistrement d'une information temporelle concernant le signal de mesure correspondant.

12. Procédé selon la revendication 10 ou 11, dans lequel le calcul du signal de mesure moyenné comprend le calcul d'un signal de mesure moyenné pondéré, dans lequel une pondération du signal de mesure concerné est déterminée en fonction d'une distance entre le capteur (2) enregistrant le signal de mesure concerné et l'actionneur (1) ou un autre point de repère du dispositif.

13. Procédé selon l'une des revendications 10 à 12, dans lequel la mesure de la même grandeur de mesure météorologique avec au moins deux capteurs (2), qui sont disposés de manière distante entre eux, comprend la mesure respective d'au moins deux grandeurs de mesure météorologiques différentes avec les au moins deux capteurs (2).

14. Procédé selon la revendication 13, dans lequel le calcul du signal de mesure moyenné comprend le calcul d'un signal de mesure moyenné pondéré, dans lequel une pondération du signal de mesure concerné est déterminée en fonction de la grandeur de mesure météorologique concernant le signal de mesure respectif, une hiérarchie étant pour cela définie entre les différentes grandeurs de mesure.
